# EUROPÄISCHE PATENTSCHRIFT

(11) **EP 4 028 206 B1**
(45) Veröffentlichungstag und Bekanntmachung des Hinweises auf die Patenterteilung: **16.08.2023**
(21) Anmeldenummer: 20767491.2
(22) Anmeldetag: 31.08.2020
(51) Int. Cl.: B23K 37/02, B23K 9/18, B23K 101/06

(54) **INNENSCHWEISSUNG VON ROHREN UND PROFILEN**
INTERNAL WELDING OF PIPES AND PROFILES
SOUDAGE INTERNE DE TUYAUX ET DE PROFILÉS

(30) Priorität: 10.09.2019 DE 102019213691; 16.06.2020 DE 102020207414
(43) Veröffentlichungstag der Anmeldung: 20.07.2022
(73) Patentinhaber: SMS Group GmbH, 40237 Düsseldorf (DE)
(72) Erfinder: STARK, Michael, 88677 Markdorf (DE)
(74) Vertreter: Kross, Ulrich
(86) Internationale Anmeldenummer: PCT/EP2020/074209
(87) Internationale Veröffentlichungsnummer: WO 2021/047932

(56) Entgegenhaltungen:
- WO-A1-2019/101889
- DE-A1-102013 219 702
- US-B2- 10 040 141

## Beschreibung

Die Erfindung betrifft eine Vorrichtung und ein Verfahren zur Innenschweißung von Rohren und Profilen, umfassend einen Kragarm, der an einer Aufhängung befestigt ist, der in das zu verschweißende Rohr oder Profil einführbar ist und an dem ein Schweißkopf verschiebbar angebracht ist, wobei der Kragarm weiter einen Laser und eine Kamera umfasst.

Bei der Innenschweißung sitzt der Schweißkopf üblicherweise am Ende eines langen Kragarms, welcher in das Rohr bzw. Profil eingefahren wird. Die für die Schweißung notwendigen Medien (Gase, Schweißstrom, Schweißkabel, Schweißpulver, Schweißdraht, ...) werden durch den oder am Kragarm entlang zum Schweißkopf geführt.

Derartige Vorrichtungen und Verfahren sind bekannt, beispielsweise aus der US 3,764,056 und der US 10,040,141 B2.

Das Dokument US 3,764,056 offenbart eine Vorrichtung, mit der Rohre von der Rohrinnenseite aus zusammengeschweißt werden können. Dabei wird ein Kragarm, an dessen Spitze ein Schweißkopf angeordnet ist, in das Rohr eingeschoben, so dass der Schweißkopf in der Nähe des zu verschweißen Gebietes, das von der Kontaktfläche der aneinandergefügt Rohre gebildet wird, platziert ist. Die Rohre rotieren, während der einstellbar angebrachte Schweißkopf die Schweißnaht erzeugt. Mithilfe einer Kamera, die in der Nähe des Schweißkopfes montiert ist, kann der Schweißvorgang visuell beobachtet und ferngesteuert werden. Der Schweißkopf kann während des Schweißvorganges relativ zum Rohr positioniert werden.

Das Dokument US 10,040,141 beschreibt eine laserkontrollierte Innenschweißmaschine für eine Rohrleitung. Das System umfasst eine externe Positioniervorrichtung, mit der die zu verschweißen Rohrsegmente relativ zueinander ausgerichtet werden können, so dass sie mit der Innenschweißmaschine verschweißt werden können. Der Schweißapparat umfasst auch einen Laser zum Überwachen des Schweißprofils und zur Führung eines Gelenkskopfes des Schweißkopfes. Eine Kamera zur visuellen Inspektion der Schweißnaht nach dem Schweißvorgang ist ebenfalls vorhanden.

Dabei ist die Verwendung eines Lasers zur Erfassung von Profilen auch aus der CN 106705857 A bekannt. Die CN 106705857 A befasst sich mit der Vermessung von Oberflächen mittels eines Laser Systems auf dem Gebiet der Baugeologie, namentlich der Baugrund- und Tunneltechnologie. Dazu wird ein auf der zu vermessenden Oberfläche platzierter Laser auf eine fest positionierte Platte gerichtet. Wird der Laser entlang der Oberfläche bewegt, oder verschiebt sich die Oberfläche bei fixiertem Laser, verändert bzw. verschiebt sich entsprechend der vom Laserstrahl auf der Platte erzeugte Lichtpunkt. Aus der Verschiebung des Lichtpunktes auf der Platten kann dann auf die Struktur der Oberfläche rückgeschlossen werden.

Die beschriebenen Innenschweißmaschinen bergen jedoch einige grundsätzliche Probleme in sich: Während des Schweißprozesses entsteht ein Magnetfeld, welches den Kragarm auslenkt und/oder verdreht. Das Ausmaß dieser Auslenkung und/oder Verdrehung hängt davon ab, wie weit der Kragarm in das zu schweißende Rohr bzw. Profil eingeführt wurde. Zusätzlich entstehen durch den Schweißprozess selbst und den Transport der Schweißmedien zum Schweißkopf - insbesondere beim "unter Pulver" schweißen; das Schweißpulver hat in der Regel eine Temperatur von 120 °C, und die Schweißkabel können bis zu 100 °C warm werden - hohe Temperaturen, welche eine zusätzliche Änderung der Durchbiegung und Verdrehung des Kragarms hervorrufen. Dabei rührt eine Verdrehung z.B. auch daher, dass das heiße Schweißpulver meist nur auf einer Seite des Kragarms transportiert wird, und dass die Schweißkabel aufgrund unterschiedlicher Strombelastung nicht alle die gleiche Temperatur haben. Bei großen Längen des Kragarms können selbst kleine Temperaturunterschiede zwischen links/rechts/oben/unten große Auslenkungen am Kragarmende/Schweißkopf hervorrufen.

Diese durch Magnetismus und Wärmeeinwirkung verursachte dreidimensionale Verdrehung, Durchbiegung oder Auslenkung des Kragarms führt zu einer entsprechenden Änderung der Position des Schweißkopfes, der sich dadurch nicht mehr in der gewünschten Lage befindet, was sich negativ auf den Schweißprozess und die Schweißnahtgeometrie, und damit auf die Schweißnahtqualität, auswirkt.

Hier will die Erfindung eine Verbesserung schaffen.

Diese Aufgabe wird erfindungsgemäß dadurch gelöst, dass bei einer Vorrichtung der eingangs genannten Art eine Steuereinrichtung zur Verschiebung des Schweißkopfes vorhanden ist, ein oder mehrere Laser an der Aufhängung angebracht sind, eine oder mehrere Kameras am Schweißkopf angebracht sind, wobei ein oder mehrere Laserstrahlen jeweils auf die eine oder die mehreren Kameras gerichtet und von diesen erkennbar sind, ein Auswertmodul vorhanden ist, welches Veränderungen der relativen Positionen der von der einen oder den mehreren Kameras erkannten Laserstrahlen auswerten, daraus ein Signal erzeugen und dieses der Steuereinrichtung zur Verschiebung des Schweißkopfes zuführen kann.

Gegenstand der Erfindung ist daher eine Vorrichtung nach Anspruch 1.

Ein Rohr kann in Sinne der Erfindung auch ein röhrenförmiges Element sein, auch elliptisch, ein Profil beispielsweise ein U- oder ein Rechteckprofil.

Gegenstand der Erfindung ist ebenfalls ein Verfahren zur Verschiebung eines Schweißkopfes in einer Vorrichtung gemäß einem oder mehreren der Ansprüche 1 bis 7, umfassend mindestens folgende Schritte:
- erfassen von Ausgangswerten X, Y der Position des oder jeden Laserstrahls mit der oder jeder Kamera bei einem Ausgangszustand der Vorrichtung,
- erfassen von Abweichungen dX, dY der Position des oder jeden Laserstrahls von den Ausgangswerten X, Y während des Betriebs der Vorrichtung,
- erzeugen eines Signals für die Steuereinrichtung aus den erfaßten Abweichungen dX, dY,
- weiterleiten des Signals an die Steuereinrichtung, welche den Schweißkopf auf Basis des Signals so verschiebt, daß die Abweichungen dX, dY kleiner werden.

Die Veränderung der relativen Positionen der Laserstrahlen kommt dadurch zustande, dass die Laserstrahlen quasi ortsfest an der Aufhängung des Kragarms befestigt sind, während die Kameras, die am Ende des Kragarms am Schweißkopf befestigt sind, sich mit der Dehnung, Biegung, Auslenkung oder Torsion des Kragarms relativ zu den ortsfesten Laserstrahlen verschieben. Durch die Rückführung des Signals an die Steuereinrichtung entsteht somit ein geschlossener Regelkreis zur Nachführung des Schweißkopfes. Das Erfassen der Abweichungen, das Erzeugen des Signals und das Weiterleiten an die Steuereinrichtung wird vorzugsweise ständig durchgeführt, z. B. in "real time", oder intermittierend regelmäßig oder unregelmäßig, vorzugsweise mit Hilfe eines Prozessrechners.

Der Schweißkopf kann dabei in mindestens zwei Raumrichtungen, z.B. vertikal und horizontal, verschiebbar angebracht sein. Vorteilhafterweise ist er in drei Raumrichtungen verschiebbar, z.B. zusätzlich entlang der oder parallel zur Achse des Kragarms. Besonders vorteilhaft ist es, wenn der Schweißkopf auch drehbar, z.B. entlang oder parallel zur Achse des Kragarms, gelagert ist, nämlich dann, wenn eine Torsion des Kragarms erkannt wird. Horizontale und vertikale Verschiebungen äußern sich in geradlinigen relativen Veränderungen der Positionen dX bzw. dY eines Laserstrahles, während das Torsionsverschiebungen gekrümmte Abweichungen dX bzw. dY erzeugen.

Grundsätzlich funktioniert die Erfindung mit nur einem Laser und nur einer Kamera. Insbesondere wenn jedoch auch eine Verdrehung bzw. Torsion erkannt werden soll, sind dafür mehrere Laser und mehrere Kameras erforderlich.

Vorzugsweise sind zwei Laser, auch als Laser Transmitter oder Laserpointer bezeichnet, und zwei Kameras vorhanden. Dadurch können horizontale, vertikale torsionsbedingte Verschiebungen des Kragarms besser aufgelöst werden. Weitere Kamera-Laser Paare würden die Auflösung zusätzlich verbessern.

Vorzugsweise ist die oder jede Kamera eine Matrix-Kamera. Durch die pixelgenaue Abbildung des Laserstrahls kann eine Veränderung der Position des Laserstrahls pixelgenau aufgelöst und berechnet werden.

Besonders vorteilhaft ist es, wenn im Strahlengang zwischen Laser und Kamera eine Projektionsfläche, bevorzugt eine transparent eingefärbte Platte, besonders bevorzugt eine transparent weiß eingefärbte Platte, angeordnet ist. Auf einer solchen Projektionsfläche kann der Laserstrahl als farbiger Punkt von den Kameras besser erkannt und verfolgt werden.

Zusätzliche Daten oder Messwerte aus Sensoren, wie z.B. ein Höhensensor am Schweißkopf (Stick-out Control) oder ein Laser-Nahtnachführungssensor (Weld Seam Tracking) würden die Kompensation der Effekt der am Kragarm bzw. die Nachführung des Schweißkopfes zusätzlich verbessern. Vorzugsweise werden auch Ausgangswerte der Schweißkopf Position bei einem Ausgangszustand der Vorrichtung erfasst. Im Ausgangszustand ist die Vorrichtung "kalt", d.h. sie hat Umgebungstemperatur.

Durch die Erfindung wird eine Reduzierung von Schweißfehlern, z.B. "Seam Alignment" oder "Undercut" erreicht, welche unter anderem durch eine ungenaue oder sogar undefinierte Schweißkopfpositionierung hervorgerufen wird. Zusätzlich werden Einflußfaktoren aus der Bedienung der Vorrichtung reduziert, was die Reproduzierbarkeit der Schweißnähte und auch deren Qualität verbessert. Bei Innenschweißanlagen entsprechend dem Stand der Technik muß die Schweißkopfposition bei Auslenkung und Verdrehung vom Bedienpersonal überprüft und gegebenenfalls neu referenziert werden. Durch das erfindungsgemäße Kompensationssystem wird eine deutliche Verbesserung der Reproduzierbarkeit des Schweißprozesses insgesamt erzielt, was sich in verbesserter Schweißnahtqualität, Schweißnahtgeometrie und geringerer Fehlerhäufigkeit widerspiegelt.

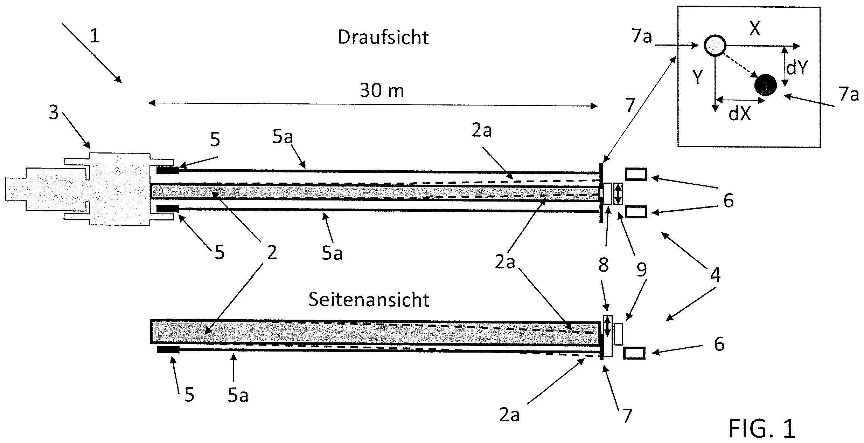

Weitere Merkmale und Einzelheiten der Erfindung ergeben sich aus den Patentansprüchen und der nachfolgenden Beschreibung von dem in der Zeichnung dargestellten Ausführungsbeispiel der Erfindung. Es zeigt
Fig. 1 als Prinzipskizze eine mögliche Ausgestaltung der erfindungsgemäßen Vorrichtung in einer Draufsicht und einer Seitenansicht.

Bei der gezeigten Vorrichtung 1 ist ein Kragarm 2 an einer Aufhängung 3 befestigt. Das zu verschweißende Rohr oder Profil ist, weil für das Verständnis der Erfindung nicht erforderlich, nicht gezeichnet. Man kann sich jedoch die Vorrichtung 1 inmitten eines Rohres oder Profiles befindlich denken. Eine Auslenkung des Kragarms 2 infolge von Magnetismus oder Temperatureinwirkung ist durch die gestrichelten Linien 2a angedeutet. In der Draufsicht in horizontaler Richtung, in der Seitenansicht in vertikaler Richtung. Am Ende des Kragarms 2 ist ein Schweißkopf 4 in vertikaler und horizontaler Richtung senkrecht zur Achse des Kragarms 3 verschiebbar angebracht, wobei der Schweißkopf 4 selbst nicht gezeichnet ist. An der Aufhängung 3 sind zwei Laser 5 befestigt. Die jeweiligen Laserstrahlen 5a sind auf zwei Kameras 6 gerichtet, die am Ende des Kragarms 3 befestigt sind. Im Strahlengang zwischen Laser 5 und Kamera 6 ist eine transparent, vorzugsweise in Weiß, eingefärbte Platte 7 angebracht, wobei für jedes Laser Kamera Paar selbstverständlich auch jeweils eine Platte 7 vorhanden sein kann. Die Platte 7 dient als Projektionsfläche für die Laserstrahlen 2a, so dass sie von den Kameras 6 als Punkt 7a gut erkannt und ihre relativen Positionen in horizontaler X und vertikale X Richtung verfolgt werden können. Aus den unterschiedlichen Positionen berechnen sich die Abweichungen dX und dY. Mittels eines (nicht dargestellten) Prozessors und einer entsprechenden Software, zusammen ein Auswertmodul, wird aus den Abweichungen ein Signal erzeugt und der (ebenfalls nicht dargestellten) Steuereinheit zurückgeführt. Diese wiederum steuert Verschiebeeinrichtungen 8 (vertikal) und 9 (horizontal), die den Schweißkopf 4 so nachführen, dass die Abweichungen dX bzw. dY kleiner werden, bzw. im Idealfall verschwinden. In der herausgezeichneten Platte 7 ist ein Laserstrahlpunt 7a zu sehen, der, von der Kamera 6 aus gesehen, infolge der Auslenkung 2a von einer Position X, Y in eine Position X +dX, Y+dY abgewichen ist.

Im gezeigten Beispiel ist die Länge des Kragarms 2 mit 30 m angegeben. Dies ist nicht als Einschränkung zu verstehen, sondern soll nur eine Vorstellung von den möglichen Größenordnungen geben. Selbstverständlich können die Längen sowohl kürzer als auch länger sein. Eine mögliche Torsion ist in dieser Zeichnung nicht angedeutet.

### Bezugszeichenliste:

- 1: Innenschweißvorrichtung
- 2: Kragarm
2a Auslenkung des Kragarms
- 3: Aufhängung
- 4: Schweißkopf
- 5: Laser
5a Laserstrahl
- 6: Kamera
- 7: Projektionsfläche
- 8: Verschiebeeinrichtung vertikal
- 9: Verschiebeeinrichtung horizontal

## Patentansprüche

1. Vorrichtung (1) zur Innenschweißung von Rohren und Profilen, umfassend einen Kragarm (2, 2a), der an einer Aufhängung (3) befestigt ist, der in das zu verschweißende Rohr oder Profil einführbar ist und an dem ein Schweißkopf (4) verschiebbar angebracht ist, wobei der Kragarm (2,2a) weiter einen Laser (5) und eine Kamera (6) umfasst, **dadurch gekennzeichnet, dass**
- eine Steuereinrichtung zur Verschiebung des Schweißkopfes (4) vorhanden ist,
- eine oder mehrere Laser (5) an der Aufhängung (3) angebracht sind,
- ein oder mehrere Kameras (6) am Schweißkopf (4) angebracht sind,
- wobei ein oder mehrere Laserstrahlen (5a) jeweils auf die eine oder die mehreren Kameras (6) gerichtet und von diesen erkennbar sind,
- ein Auswertmodul vorhanden ist, welches Veränderungen (dX, dY) der relativen Positionen (X,Y) der von der einen oder den mehreren Kameras (6) erkannten Laserstrahlen (5a) auswerten, daraus ein Signal erzeugen und dieses der Steuereinrichtung zur Verschiebung des Schweißkopfes (4) zuführen kann.

2. Vorrichtung nach Anspruch 1, **dadurch gekennzeichnet, dass** zwei Laser (5) und zwei Kameras (6) angebracht sind.

3. Vorrichtung nach Anspruch 1 oder 2, **dadurch gekennzeichnet, dass** die oder jede Kamera (6) eine Matrix-Kamera ist.

4. Vorrichtung nach einem oder mehreren der Ansprüche 1 bis 3, **dadurch gekennzeichnet, dass** im Strahlengang zwischen dem einen oder den mehreren Lasern (5) und der einen oder den mehreren Kameras (6) eine Projektionsfläche (7) angeordnet ist.

5. Vorrichtung nach Anspruch 4, **dadurch gekennzeichnet, dass** die Projektionsfläche (7) eine transparent eingefärbte Platte ist.

6. Vorrichtung nach einem oder mehreren der Ansprüche 1 bis 5, **dadurch gekennzeichnet, dass** zusätzliche Sensoren vorhanden und mit dem Auswertmodul verbunden sind.

7. Vorrichtung nach Anspruch 6, **dadurch gekennzeichnet, dass** mindestens einer der zusätzlichen Sensoren ein Höhensensor ist.

8. Verfahren zur Verschiebung eines Schweißkopfes (4) in einer Vorrichtung (1) gemäß einem oder mehreren der Ansprüche 1 bis 7, umfassend mindestens folgende Schritte:
- erfassen von Ausgangswerten (X, Y) der Position des oder jeden Laserstrahls (5a) mit der oder jeder Kamera (6) bei einem Ausgangszustand der Vorrichtung (1),
- erfassen von Abweichungen (dX, dY) der Position des oder jeden Laserstrahls (5a) von den Ausgangswerten (X, Y) während des Betriebs der Vorrichtung (1),
- erzeugen eines Signals für die Steuereinrichtung aus den erfassten Abweichungen (dX, dY),
- weiterleiten des Signals an die Steuereinrichtung, welche den Schweißkopf (4) auf Basis des Signals so verschiebt (8, 9), dass die Abweichungen (dX, dY) kleiner werden.

9. Verfahren nach Anspruch 8, **dadurch gekennzeichnet, dass** zusätzlich Messwerte oder Daten von zusätzlichen Sensoren zur Erzeugung des Signals verwendet werden.

10. Verfahren nach Anspruch 8 oder 9, **gekennzeichnet durch**
- erfassen von Ausgangswerten der Schweißkopfposition bei einem Ausgangszustand der Vorrichtung (1).

## Claims

1. Device (1) for internal welding of tubes and sections, comprising a cantilever arm (2, 2a) which is secured to a suspension (3) and introducible into the tube or section to be welded and on which a welding head (4) is mounted to be displaceable, wherein the cantilever arm (2, 2a) further comprises a laser (5) and a camera (6), **characterised in that**
- a control device for displacing the welding head (4) is present,
- one or more lasers (5) are mounted on the suspension (3),
- one or more cameras (6) are mounted on the welding head,
- wherein one or more laser beams (5a) are each directed to the one or more cameras (6) and are recognisable by this or these,
- an evaluating module is present, which can evaluate changes (dX, dY) of the relative positions (X, Y) of the laser beams (5a) recognised by the one or more cameras (6), generate a signal therefrom and feed this to the control device for displacement of the welding head (4).

2. Device according to claim 1, **characterised in that** two lasers (5) and two cameras (6) are mounted.

3. Device according to claim 1 or 2, **characterised in that** the or each camera (6) is a matrix camera.

4. Device according to one or more of claims 1 to 3, **characterised in that** a projection area (7) is arranged in the beam path between the one or more lasers (5) and the one or more cameras (6).

5. Device according to claim 4, **characterised in that** the projections area (7) is a transparent coloured plate.

6. Device according to one of more of claims 1 to 5, **characterised in that** additional sensors are present and are connected with the evaluating module.

7. Device according to claim 6, **characterised in that** at least one of the additional sensors is a height sensor.

8. Method of displacing a welding head (4) in a device (1) according to one or more of claims 1 to 7, comprising at least the following steps:
- detecting start values (X, Y) of the position of the or each laser beam (5a) by the or each camera (6) in a start state of the device (1),
- detecting departures (dX, dY) of the position of the or each laser beam (5a) from the start values (X, Y) during operation of the device (1),
- generating a signal for the control device from the detected deviations (dX, dY),
- passing on the signal to the control device, which so displaces (8, 9) the welding head (4) on the basis of the signal that the deviations (dX, dY) become smaller.

9. Method according to claim 8, **characterised in that** additional measurement values or data from additional sensors are used for generating the signal.

10. Method according to claim 8 or 9, **characterised by**
- detecting start values of the welding head position in a start state of the device (1).

## Revendications

1. Dispositif (1) destiné à la soudure interne de tubes et de profilés, qui comprend un bras en porte-à-faux (2, 2a) qui est fixé à une suspension (3), qui peut être introduit dans le tube ou dans le profilé qui doit être soudé et contre lequel vient s'appliquer en coulissement une tête de soudure (4) ; dans lequel le bras en porte-à-faux (2, 2a) comprend en outre un laser (5) et une caméra (6), **caractérisé en ce que** :
- l'on prévoit un mécanisme de commande pour le déplacement de la tête de soudure (4) ;
- un ou plusieurs lasers (5) sont appliqués sur la suspension (3) ;
- une ou plusieurs caméras (6) sont appliquées sur la tête de soudure (4) ;
- dans lequel un ou plusieurs rayons laser (5a) sont orientés de manière respective sur lesdites une ou plusieurs caméras (6) et peuvent être reconnus par ces dernières ;
- on prévoit un module d'évaluation qui peut évaluer des modifications (dX, dY) des positions relatives (X, Y) des rayons laser (5a) qui sont reconnus par lesdites une ou plusieurs caméras (6), qui peut générer un signal à partir desdites évaluations et qui peut acheminer ledit signal au mécanisme de commande à des fins de déplacement de la tête de soudure (4).

2. Dispositif selon la revendication 1, **caractérisé en ce que** deux lasers (5) et deux caméras (6) sont appliqués.

3. Dispositif selon la revendication 1 ou 2, **caractérisé en ce que** la caméra ou chaque caméra (6) est une caméra matricielle.

4. Dispositif selon une ou plusieurs des revendications 1 à 3, **caractérisé en ce qu'**une surface de projection (7) est disposée dans la trajectoire des rayons entre lesdits un ou plusieurs lasers (5) et entre lesdites une ou plusieurs caméras (6).

5. Dispositif selon la revendication 4, **caractérisé en ce que** la surface de projection (7) est une plaque teintée en une couleur transparente.

6. Dispositif selon une ou plusieurs des revendications 1 à 5, **caractérisé en ce que** l'on prévoit des capteurs supplémentaires qui sont reliés au module d'évaluation.

7. Dispositif selon la revendication 6, **caractérisé en ce qu'**au moins un des capteurs supplémentaires représente un capteur de la hauteur.

8. Procédé destiné au déplacement d'une tête de soudure (4) dans un dispositif (1) selon une ou plusieurs des revendications 1 à 7, qui comprend au moins les étapes suivantes dans lesquelles :
- on enregistre des valeurs de départ (X, Y) de la position du ou de chaque rayon laser (5a) avec la caméra ou chaque caméra (6) dans un état de départ du dispositif (1) ;
- on enregistre des déviations (dX, dY) de la position du rayon laser ou de chaque rayon laser (5a) par rapport aux valeurs de départ (X, Y) au cours de la mise en service du dispositif (1) ;
- on génère un signal pour le mécanisme de commande à partir des déviations (dX, dY) qui ont été enregistrées ;
- on transmet le signal au mécanisme de commande qui déplace (8, 9) alors la tête de soudure (4) sur la base du signal de façon à diminuer les déviations (dX, dY).

9. Procédé selon la revendication 8, **caractérisé en ce que** l'on utilise en outre des valeurs de mesure ou des données de capteurs supplémentaires pour la génération du signal.

10. Procédé selon la revendication 8 ou 9, **caractérisé par** le fait :
- d'enregistrer des valeurs de départ de la position de la tête de soudure dans un état de départ du dispositif (1).
